# EUROPÄISCHE PATENTANMELDUNG

(11) **EP 0 866 233 A2**
(43) Veröffentlichungstag der Anmeldung: **23.09.1998**
(21) Anmeldenummer: 98105036.2
(22) Anmeldetag: 19.03.1998
(51) Int. Cl.: F16C 29/02

(54) **Vorrichtung zur Funktionsüberwachung und Stillsetzung für eine Luftlager-Schlittenführung**

(30) Priorität: 20.03.1997 DE 19711710
(71) Anmelder: Klingelnberg Söhne Leiterplattentechnik GmbH, 87600 Kaufbeuren (DE)
(72) Erfinder: Seitz, Helmut, 87600 Kaufbeuren (DE)
(74) Vertreter: Ruschke, Hans Edvard, Dipl.-Ing.

(57) **Zusammenfassung**

Vorrichtung zur Funktionsüberwachung und Stillsetzung für Luftlager, etwa der Schlittenführung einer Präzisionswerkzeugmaschine, wobei die Lagerkörper für die Luftlager auf ihrer ebenen Lagerfläche Austrittsöffnungen für die Druckluft im Bereich des Zentrums der Lagerfläche aufweisen. Die Druckmessung zwischen der Lagerfläche und der Grundplatte erfolgt über eine Meßleitung, die in eine Bohrung im Lagerkörper mündet, die senkrecht zur Lagerfläche durch ihn hindurch verläuft und mit einer Öffnung im inneren Drittel der Lagerfläche endet. Am anderen Ende der Meßleitung sitzt ein Druckwächter, der mit einem galvanischen Schalter ausgestattet ist. Die zu jedem Lager und seinem Druckwächter gehörigen galvanischen Schalter sind in Reihe geschaltet und mit der Steuerung der betriebenen Maschine verbunden. Schon der Ausfall eines Lagers führt dann aufgrund der Reihenschaltung über die Steuerung der Maschine zur Abgabe eines akustischen und optischen Signales und setzt die Maschine still. Alternativ können die Druckwächter durch Drucksensoren mit dazugehörigen Auswerteelektroniken ersetzt werden.

## Beschreibung

Die vorliegende Erfindung betrifft eine Vorrichtung zur Funktionsüberwachung und Stillsetzung für eine Anzahl von Luftlagern, etwa der Schlittenführung einer Präsisions-Werkzeugmaschine. Beim praktischen Einsatz kommen eine ganze Reihe derartiger Lagerkörper gleichzeitig zur Anwendung, wobei die Druckluftzufuhr in der Regel über geeignete Schläuche erfolgt. Dabei kann es vorkommen, daß die Druckluftzufuhr zu einem der Luftlager unterbrochen wird, beispielsweise weil sich der Schlauch ablöst oder ein Abschnitt der Zufuhreinrichtung verstopft ist.
Weitere mögliche Faktoren, die die Funktionsweise der Luftlager beeinträchtigen können, sind eine Verschmutzung der Lagerflächen oder auch eine mechanische Überlastung, was dazu führen kann, daß die Luftlager einer Schlittenführung nicht abheben oder mit einem zu geringen Luftspalt arbeiten. Werden Fehler werden nicht sofort bemerkt, können sowohl das Lager als auch die Schlittenführung einer Werkzeugmaschine erheblich in Mitleidenschaft gezogen werden.

Um einen solchen Fehler schon im Ansatz zu vermeiden, ist es sinnvoll, die Flughöhe bzw. das generelle Abheben der Luftlager durch geeignete Einrichtungen zu überwachen.

Aus der EP-B1-0 211 974 der Anmelderin ist ein Lagerkörper für ein Luftkissenlager eines Linearlagers bekannt, bei dem an der inneren Luftsammelkammer ein elektronischer Druckwächter- oder -sensor vorgesehen ist, der mit der elektronischen Steuerung der Werkzeugmaschine verbunden ist. Sobald der Druckwächter einen erheblichen Abfall oder auch nur eine wesentliche Veränderung des Druckes in der Sammelkammer feststellt, kann die Steuerung der Werkzeugmaschine entweder letztere außer Kraft setzen oder geeignete Warnsignale auslösen. Ein derartiger Druckwächter kann etwa nach dem piezoresistiven Prinzip arbeiten. Aus der GB-PS 1 103 016 ist eine Einrichtung bekannt, mit der die hydrostatischen Drücke gemessen und verglichen werden, die an der Eingangs- und an der Ausgangsseite eines Drosselventils anliegen, das in der Zuführleitung sitzt, die dem Lagerkörper Öl aus einem unter Druck stehenden Reservoir zuführt. Besteht eine Druckdifferenz, etwa aufgrund einer Verstopfung des Drosselventils, wird ein Ventil in einer Nebenleitung, die das Drosselventil umgeht, geöffnet und über dieses dem Lagerkörper weiter Öl zugeführt. Aus der DE 33 38 728 ist eine Regelvorrichtung für Fluidlager bekannt, die ebenfalls die Drücke an den Luftauslaßleitungen mißt, um dann anhand von vorbestimmten Grenzwerten den zugeführten Fluiddruck zu steuern. Allen drei Offenbarungen ist gemeinsam, daß der Druck bzw. die Druckdifferenz nicht im Zwischenbereich zwischen dem Lagerkörper und der Grundplatte abgenommen wird, sondern vorher im Bereich der Luft- bzw. Ölzufuhr. Das hat den wesentlichen Nachteil, daß der eigentlich interessierende Druck im Zwischenbereich, der allein für einen ordnungsgemäßen Betrieb der Gesamtanordnung verantwortlich ist, nicht bekannt ist. Dieser Druck kann trotz der vorgenommenen Messungen sehr wohl unzureichend sein, etwa infolge einer Verstopfung in dem Abschnitt der Zufuhrleitung, der noch zwischen dem Ort der abgenommenen Drücke und dem Zwischenraum zwischen Lager und Grundplatte verbleibt.

Aus der US-PS 3 722 996 ist ein Luftlagersystem bekannt, das aus runden Lagerkörpern besteht, die in ihrer Lagerfläche mehrere konzentrische Rillen aufweisen. Die äußeren Rillen dienen der Druckluftzufuhr und die mittleren der Erzeugung eines Vakuums. Die eigentliche Überwachung, ob das Lager einwandfrei arbeitet, wird durch die inneren Rillen gewährleistet. Durch sie wird ein zusätzlicher vordefinierter 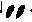 Eich*"* -Luftstrom zu- und abgeführt, dessen Stärke im Verhältnis zum Abstand zwischen Lager und Grundplatte steht. Es wird also nicht direkt der Druck im Zwischenraum ermittelt, sondern vielmehr durch die Messung des zusätzlichen Eichluftstromes auf die Flughöhe des Lagerkörpers geschlossen. Die Erzeugung und Auswertung dieses Eichluftstromes sowie die daraus eventuell resultierende Änderung der. zugeführten Druckluft geschieht über komplizierte Einrichtungen, wobei offensichtlich jeder Lagerkörper mit einer solchen Einrichtung verbunden sein muß. Ein weiterer Nachteil neben der augenfälligen Komplexität dieser Vorrichtung besteht darin, daß der Eichluftstrom über ein Leitungssystem geführt wird, das vom Leitungssystem, mit dein die Druckluft zugeführt wird, völlig unabhängig ist. Durch die Aufwendigkeit des Leitungssystems für den Eichluftstrom ist dieses auch sehr störanfällig, d.h es kann bei der Drucküberwachung zu fehlerhaften Resultaten kommen, die lediglich im Überwachungssystem liegen und gar nicht im eigentlichen Drucksystem.

Aus der DE 30 24 150 ist ein hydrostatisch entlasteter Führungsmechanismus für eine Maschine bekannt, der zwar den Druck im Raum zwischen Lagerkörper und Führungsfläche mißt. Ziel ist es jedoch, diesen Druck zu korrigieren, was ein aufwendiges Meß- und Auswertesystem für jedes einzelne Lager notwendig macht.

Demgegenüber ist es ein Ziel der vorliegenden Erfindung, ein einfaches System zur Funktionsüberwachung von Luftlagern bereitzustellen, das nicht nur den tatsächlich vorhandenen Luftdruck im Zwischenraum zwischen Lager und Grundplatte auswertet, sondern auch eine einfache Gestaltung einer Überwachungseinrichtung für eine Vielzahl von Luftlagern ermöglicht, um die Anlage mittles einer Stillsetzungseinrichtung stillzusetzen, sobald ein Lager ausfällt oder fehlerhaft arbeitet.

Diese Aufgabe wird in der gegenwärtig bevorzugten Ausführungsform dadurch gelöst, daß die Lagerkörper für die Luftlager auf ihrer ebenen Lagerfläche mindestens eine Austrittsöffnung für die Druckluft im Bereich des Zentrums der Lagerfläche aufweisen, wobei die Austrittsöffnung(en) über radial nach außen verlaufende Verteilungskanäle mit unter einander verbundenen Drucktaschen in der Nähe des Randes des Lagerkörpers verbunden ist (sind). Die Druckmessung zwischen der Lagerfläche und der Grundplatte erfolgt über eine Meßleitung, die in eine Bohrung im Lagerkörper mündet; die senkrecht zur Lagerfläche durch ihn hindurch verläuft und mit einer Öffnung in der Nähe des Zentrums der Lagerfläche endet. Am anderen Ende der Meßleitung sitzt ein Druckwächter, der beispielsweise mit einem galvanischen Schalter versehen sein kann. Die zu jedem Lager und seinem Druckwächter gehörigen galvanischen Schalter sind in Reihe geschaltet und mit der Steuerung der betriebenen Maschine verbunden. Schon der Ausfall eines Lagers führt dann aufgrund der Reihenschaltung über die Steuerung der Maschine zur Abgabe z.B. eines akustischen und optischen Signales und setzt die Maschine still.

Im Gegensatz zu herkömmlichen Überwachungseinrichtungen wird bei der vorliegenden Erfindung der tatsächliche Druck zwischen Lager und Grundplatte gemessen, was den Vorteil mit sich führt, daß diese Art der Überwachung wesentlich weniger anfällig für falsche Resultate ist. Des weiteren stellt die Kontrolle mittels Druckwächtern eine einfache und kostengünstige Möglichkeit zur Überwachung der Funktionssicherheit etwa einer luftgelagerten Schlittenführung dar.

In einer modifizierten Ausführungsform können anstelle der Druckwächter Drucksensoren verwendet werden, wobei jedes Luftlager mit einer Auswertelektronik verbunden ist. Dies ist insbesondere dann angebracht, wenn hohe Anforderungen an die Einhaltung der Flughöhe der Luftlager gestellt werden. Diese Anordnung ermöglicht aufgrund des Einsatzes der Drucksensoren mit den dazugehörigen Auswertelektroniken die analoge Registrierung aller Flughöhenänderungen.

Weitere Ziele und Vorteile der vorliegenden Erfindung ergeben sich aus dem folgenden Teil dieser Beschreibung sowie den beigefügten Zeichnungen, die eine derzeit bevorzugte Ausführungsform anhand der Prinzipien der Erfindung zeigen.
- Fig. 1: zeigt eine Draufsicht auf die Lagerfläche des Lagerkörpers,
- Fig. 2: zeigt einen Querschnitt durch den auf einem Luftpolster über der Grundplatte aufliegenden Lagerkörper mit Gelenk, Druckluftzufuhr und Meßleitung,
- Fig. 3: zeigt die mit der Steuerung der Maschine verbundene Reihenschaltung der galvanischen Schalter der Druckwächter, und
- Fig. 4: zeigt einen der über eine Auswertelektronik mit der Steuerung der Maschine verbundenen Drucksensoren.

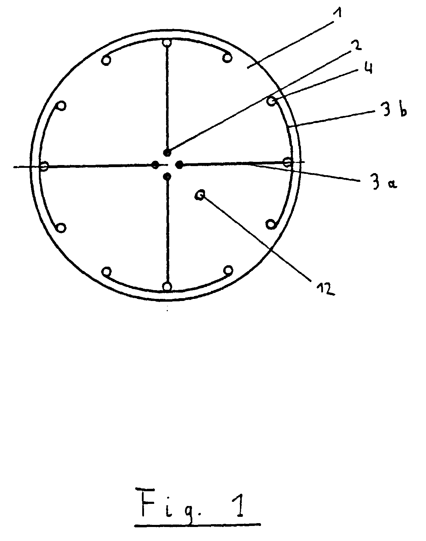

Die Lagerfläche 1 des Lagerkörpers besitzt im dargestellten Ausführungsbeispiel einen kreisrunden Umfang, wobei sich in der Nähe des Zentrums der Lagerfläche vier Luftaustrittsöffnungen 2 befinden, von denen jede über einen radial nach außen verlaufenden Luftverteilungskanal 3a mit der mittleren von drei in der Nähe des Randes sitzenden Drucktaschen 4 verbunden ist (Fig. 1). Die jedem Luftverteilungskanal 3a zugeordneten drei Drucktaschen 4 sind untereinander mit einem konzentrisch zum Rand der Lagerfläche verlaufenden Luftverteilungskanal 3b verbunden. Das bedeutet, daß bei vier Luftaustrittsöffnungen 2 in jedem Quadranten der kreisförmigen Lagerfläche 1 drei Drucktaschen 4 von einer Luftaustrittsöffnung 2 versorgt werden.

Weder der Lagerkörper selbst noch die Drucktaschen müssen wie im Ausführungsbeispiel dargestellt kreisförmig sein, sie können durchaus andere Formen haben, je nach den fertigungstechnischen Möglichkeiten und Wünschen.

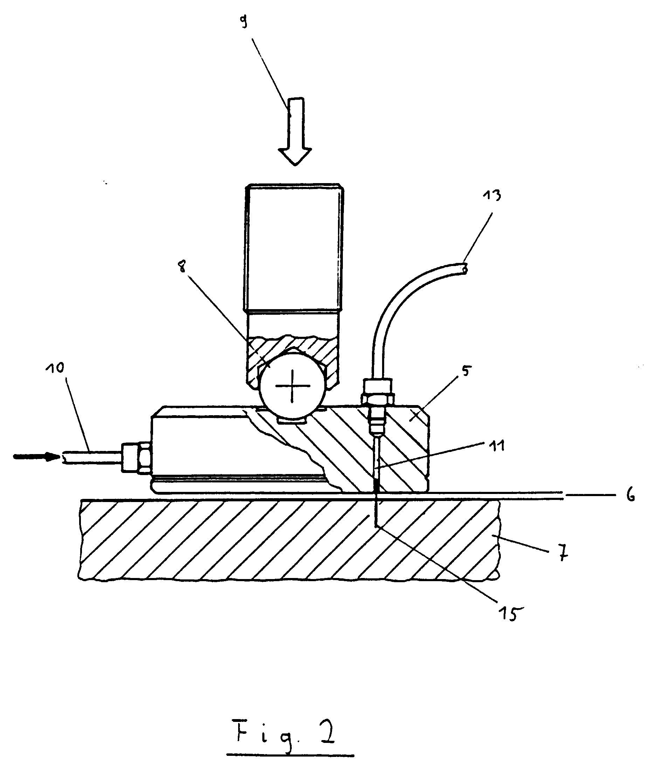

Im Zentrum der Deckfläche des Lagerkörpers 5, der über einem Luftspalt 6 auf der Grundplatte 7 aufliegt, ist ein Kugelgelenkkörper 8 vorgesehen, über den die Lasten 9 eingeleitet werden, die das Lager aufzunehmen hat (Fig. 2). An der einen Seite des Lagerkörpers 5 ist eine Druckluftleitung 10 befestigt, die dem Lagerkörper 5 Druckluft zuführt, die über eine Luftsammelkammer durch die Luftaustrittsöffnungen 2 an der Lagerfläche 1 austritt. Durch das Innere des Lagerkörpers 5 verläuft in Richtung Lagerfläche 1 eine Bohrung 11, die mit einer Öffnung 12 in der Lagerfläche 1 endet und an deren anderem Ende eine Meßleitung 13 befestigt ist, die zu einem Druckwächter 14 führt, der den im Luftspalt 6 herrschenden Druck 15 registriert. Es hat sich gezeigt, daß das Druckverhältnis zwischen Rand und Zentrum der Lagerfläche 1 ca. 1 zu 1,4 beträgt, d.h. der Druck am Rand ist um 40 % geringer als derjenige im Zentrum. Aus Gründen der Meßgenauigkeit hat es sich daher als vorteilhaft erwiesen, die Öffnung 12 der mit den Druckwächtern 14 versehenen Druckmeßeinrichtung nicht außerhalb des inneren Drittels der Lagerfläche 1 anzuordnen. Sie kann letztlich auch außerhalb des inneren Drittels liegen, wenn die Meßgenauigkeit der Einrichtung hinreicht.

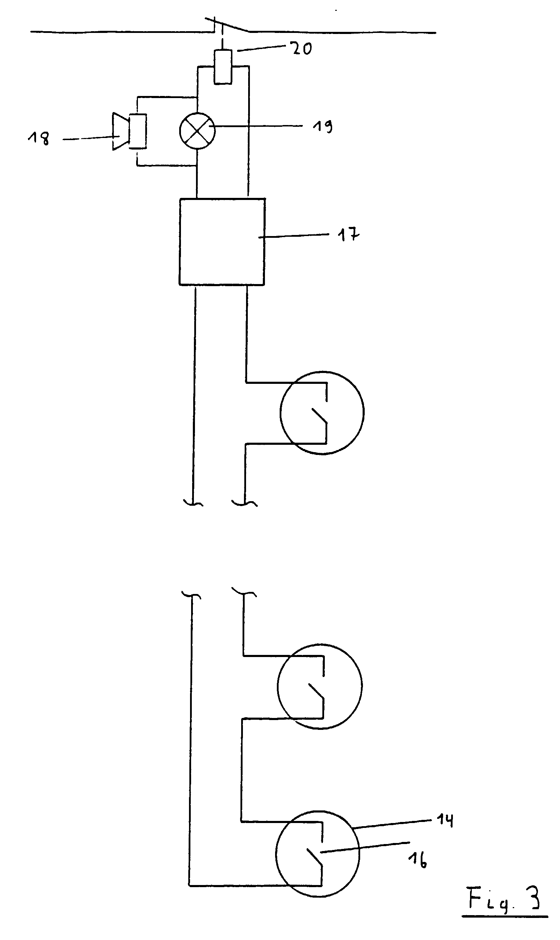

Jeder Druckwächter 14 ist mit einem galvanischen Schalter 16 versehen, der mit den Schaltern aller anderen Lager in Reihe geschaltet ist (Fig. 3). Diese Reihenschaltung ist mit der Steuerung 17 der Maschine verbunden, sowie mit einer Warneinrichtung, die akustische und optische Signale 18 und 19 abgeben kann, und mit einem Relais 20. Liegt nun der vom Druckwächter 14 im Luftspalt 6 eines der Lager registrierte Druck 15 nicht in einem bestimmten Bereich, ist der zu diesem Druckwächter gehörige galvanische Schalter 16 nicht geschlossen und die Reihenschaltung wird unterbrochen. Das führt über die Steuerung 17 der Maschine zur Abgabe akustischer und/oder optischer Warnsignale 18 und 19 und zur Stillsetzung der Maschine durch das Relais 20.

Durch die Reihenschaltung der galvanischen Schalter mit der Steuerung der Maschine und den Warneinrichtungen wird ein einfaches System zur Drucküberwachung geschaffen, das es nicht nötig macht, an jedem Lager getrennt aufwendige Einrichtungen zu verwenden, die den Druck im Luftspalt zwischen Lagerfläche und Grundplatte auswerten und in entsprechender Weise darauf reagieren. Vielmehr werden an jedem Lager lediglich einfache Druckwächter bereitgestellt, durch deren Reihenschaltung gewährleistet wird, daß schon ein einziges nicht ordnungsgemäß funktionierendes Lager hinreicht, um Warnmeldungen auszugeben und die Maschine stillzusetzen.

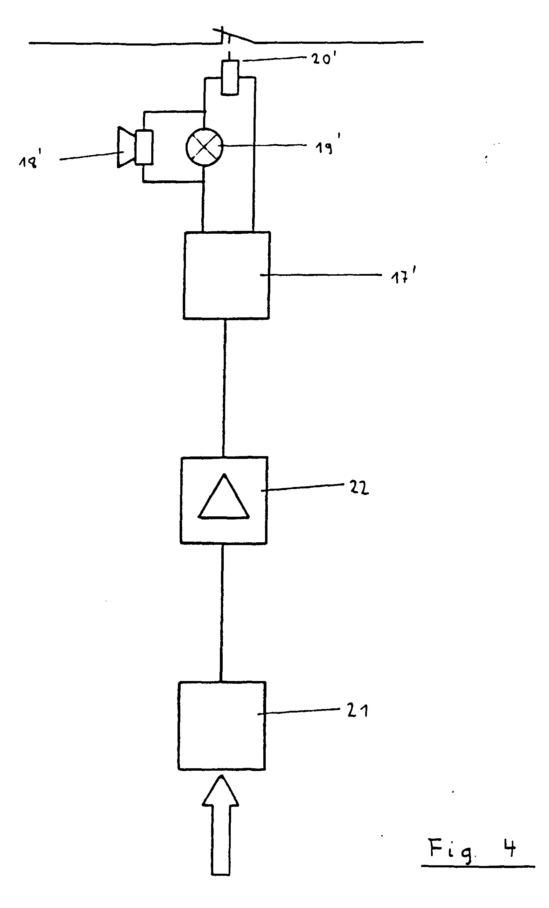

In einer alternativen Ausführungsform werden anstelle der Druckwächter Drucksensoren 21 zur exakten Bestimmung der Flughöhe der Lager verwendet, die für jedes Lager mit einer Auswerteelektronik versehen sind und über piezoelektrische Aufnehmer 22 und Spannungswandler 23 mit der Steuerung 17' der Maschine verbunden sind, sowie mit einer Warneinrichtung, die akustische und optische Signale 18' und 19' abgeben kann, und mit einem Relais 20' (Fig. 4). Auch hier ist wieder eine Reihenschaltung denkbar, die gewährleistet, daß schon die falsche Flughölle eines der Lager hinreicht, um über die Steuerung 17' der Maschine die Abgabe akustischer und optischer Warnsignale 18' und 19' auszulösen und die Maschine durch das Relais 20' stillzusetzen.

## Patentansprüche

1. Vorrichtung zur Funktionsüberwachung und Stillsetzung der Luftlager-Schlittenführung einer Präzisions-Werkzeugmaschine z.B. einer Leiterplatten-Bohrmaschine, wobei jeder Lagerkörper
eine ebene Lagerfläche mit mehreren in der Lagerfläche ausgebildeten und im Bereich von deren Zentrum angeordneten Luftaustrittsöffnungen umfaßt, sowie
an den Lagerkörper angeschlossene Drucküberwachungseinrichtungen,
**dadurch gekennzeichnet,**
daß die Drucküberwachungseinrichtungen durch eine Meßleitung und eine Bohrung im Lagerkörper, die in einer Öffnung in der Lagerfläche endet, mit dem Luftspalt zwischen der Lagerfläche und der Grundplatte verbunden sind und auf den tatsächlich dort vorhandenen Druck reagieren und
daß die Drucküberwachungseinrichtungen aller Lager in einer Reihenschaltung mit der Steuerung der Maschine und einer akustischen und optischen Warneinrichtung sowie einem Relais zur Stillsetzung der Maschine verbunden sind, die aktiviert werden, sobald eines der Lager ausfällt.

2. Vorrichtung nach Anspruch 1, **dadurch gekennzeichnet, daß** sich die Öffnung der Bohrung, die die Drucküberwachungseinrichtungen mit dem Luftspalt zwischen Lagerfläche und Grundplatte verbindet, vorzugsweise im inneren Drittel der Lagerfläche befindet.

3. Vorrichtung nach Anspruch 1, **dadurch gekennzeichnet, daß** es sich bei den Drucküberwachungseinrichtungen um mit galvanischen Schaltern ausgestattete Druckwächter handelt.

4. Vorrichtung nach Anspruch 1, **dadurch gekennzeichnet, daß** es sich bei den Drucküberwachungseinrichtungen um Drucksensoren mit Auswerteelektroniken, piezoelektrischen Aufnehmern und Spannungsverstärkern handelt.
